**Europäisches Patentamt**

**European Patent Office**

**Office européen des brevets**

(11) Veröffentlichungsnummer: **0 389 934 A1**

## EUROPÄISCHE PATENTANMELDUNG

(21) Anmeldenummer: **90105279.5**

(22) Anmeldetag: **21.03.90**

(51) Int. Cl.⁵: **D03D 27/10, B61D 17/22, B23Q 11/08**

(30) Priorität: **25.03.89 DE 8903746 U
03.11.89 DE 8913020 U
13.03.90 DE 4007862**

(43) Veröffentlichungstag der Anmeldung:
**03.10.90 Patentblatt 90/40**

(84) Benannte Vertragsstaaten:
**AT BE CH DE DK ES FR GB GR IT LI LU NL SE**

(71) Anmelder: **PARABEAM Industrie- en Handelsonderneming B.V.
Hoogeindsestraat 49
NL-5705 AL Helmond(NL)**

(72) Erfinder: **André De La Porte, Gilles
Pallandtlaan, Bar. V. 5
Rozendaal(NL)**
Erfinder: **Van der Vleuten, Peter
Gezellestraat 3
NL-5421 PE Gemert(NL)**

(74) Vertreter: **Sparing, Nikolaus, Dipl.-Ing. et al
Rethelstrasse 123
D-4000 Düsseldorf 1(DE)**

(54) **Verschliessbahn für Übergänge.**

(57) Die Erfindung betrifft eine Verschließbahn (1) für Übergänge, bestehend aus einem mindestens einseitig gehaltenen, wellenförmig oder eben angeordneten, textilen Flächengebilde (5) mit einer Polymer- oder Kunststoffbeschichtung (6). Zur einfachen und zweckmäßigen Ausgestaltung der Verschließbahnen (1) ist vorgesehen, daß als textiles Flächengebilde (5) eine unaufgeschnittene Doppelpolware mit Oberware (7) und Unterware (8) sowie dazwischen angeordneten, einen Florraum bildenden Polketten (9) ausgebildet ist, wobei die Länge und Dichte der Polketten (9) derart gewählt ist, daß diese elastische Verbindungsstege zwischen Ober- (7) und Unterware (8) bilden.

EP 0 389 934 A1

FIG.2a

Die Erfindung betrifft eine Verschließbahn für Übergänge zum Einbau zwischen beweglichen Fahrzeug- oder Maschinenteilen oder voneinander zu trennenden Räumen mit einer oder mehreren in Form eines Vorhanges, eines Balges, einer Tür oder eines Tors angeordneten Materialbahnen aus einem mit einem Polymer oder Kunststoff beschichteten, textilen Flächengebilde.

Derartige Verschließbahnen sind bekannt als dichtende und verschiebliche Übergangseinrichtungen zwischen beweglichen Teilen oder zum Verschließen von Ein-und Ausgängen in oder beispielsweise an Fabrikhallen. Von dem Bahnmaterial für Übergänge wird unter anderem Festigkeit, Steifigkeit sowie eine gute Schall-und Wärmeisolation erwartet. Dabei ist allerdings zu beachten, daß die Anforderungen an das Eigenschaftsprofil dieser Verschließbahnen im allgemeinen in verschiedenen Richtungen unterschiedlich sind. Beispielsweise bei Schwingtüren wird in vertikaler Richtung eine hohe Steifigkeit verlangt, damit die Verschließbahnhöhe gewährleistet ist, während in der horizontalen Richtung ein gewisses biegeelastisches Verhalten erwartet wird, um ein seitliches Wegbiegen der Verschließbahn zur Bildung einer Durchgangsöffnung zu erleichtern. Dabei soll sich nach Druckentlastung eine Rückstellung ergeben. Demgegenüber ist bei einem Rolltor in vertikaler Richtung ein gewisses biegeelastisches Verhalten erwünscht, um ein Aufrollen zu erlauben. In horizontaler Richtung ist dagegen Steifigkeit erwünscht, damit die Verschließbahnbreite gewährleistet ist.

Als Material für die Verschließbahnen finden insbesondere Kunststoffe, wie z.B. PVC oder Gummi Verwendung, wobei den vorstehenden Anforderungen durch Wahl des Kunststoffes oder Einsatz von Falten genügt werden soll. Diese Verschließbahnen zeigen keine ausreichenden Dichtungseigenschaften und neigen zu frühzeitigem Verschleiß.

Aufgabe der Erfindung ist es daher, eine Verschließbahn für Übergänge nach dem Oberbegriff des Anspruchs 1 zu schaffen, die einfach und zweckmäßig aufgebaut ist.

Diese Aufgabe wird gemäß dem kennzeichnenden Teil des Anspruchs 1 dadurch gelöst, daß als textiles Flächengebilde eine unaufgeschnittene Doppelpolware mit Oberware und Unterware sowie dazwischen angeordneten, einen Florraum bildenden Polketten vorgesehen ist, wobei die Länge und Dichte der Polketten derart gewählt ist, daß diese elastische Verbindungsstege zwischen oberware und Unterware bilden.

Hierdurch wird eine Verschließbahn geschaffen, deren textiles Flächengebilde einen dreidimensionalen Aufbau besitzt. Die mechanischen Eigenschaften, insbesondere Festigkeit und Steifigkeit, sind ausgehend von einer speziellen Textilkonstruktion durch Wahl und Einstellung der Fadenverkreuzung, Fadenverschlingung, Dichte und Länge der Polketten sowie Einsatz und Kombination verschiedener Garne bezüglich Faserart, z.B. Spinnfasern, Multifilamente, Monofilamente, und Fasermaterial, z. B. Mischfasern, Chemiefasern, hochfeste Fasern, entsprechend einem gewünschten Eigenschaftsprofil für den jeweiligen Verschließbereich variierbar.

Dabei können die beiden Gewebelagen der Doppelpolware aufeinanderliegend oder je nach Länge der Polfäden, die vorzugsweise zwischen 0,1 und 4 mm liegt, mit Abstand zueinander angeordnet sein. Die vorzugsweise dichte Einbindung der Polfäden schafft eine sichere Verankerung der Gewebelagen, wobei die Polfäden unter Druck- und Zugbeanspruchung eine Rückstellkomponente aufbauen und damit Ober- und Unterware elastisch zueinander verbinden. Mit der noch vergleichs weise dünnen Textillage einer nicht aufgeschnittenen Doppelpolware auch eine gute Wärme- und Schallisolation erzielt. Die zahlreichen Polketten, die als gerade oder schräglaufende Querfäden die Ober- und Unterware in einem bestimmten Abstand halten können, bewirken zusätzlich eine gute Verteilung der isolierend wirkenden Luft.

Auch andere physikalische Eigenschaften der Verschließbahn, wie Temperatur-, Ermüdungs-, Witterungs- und Alterungsbeständigkeit, Unempfindlichkeit gegen die Einwirkung von Chemikalien, Schwerbrennbarkeit, Art der Verbrennungsgase usw. können durch die Wahl der Materialien für die Garne der Kett-, Schuß-, Maschen- und Polfäden an die besonderen Anforderungen des Einsatzbereiches angepaßt werden. Die Beschichtung mit einer Polymerverbindung oder einem Kunststoff kann folglich auch nur einseitig anstelle von beidseitig erfolgen.

Die Verschlußbahn kann durch wellenförmige Anordnung eines textilen Flächengebildes oder Verformung desselben in einzelne, zickzack-förmig zueinander angeordneter Materialbahnen in die Form eines Vorhanges gebracht werden. Es können aber auch weitgehend glatte Materialbahnen seitlich angelenkte Klapp-oder Schwingtüren bilden oder als Rolltore eingesetzt werden.

Bei Ausbildung der unaufgeschnitenen Doppelpolware als Doppelpolgewebe kann über eine Kombination verschiedener Fasergarne die Steifigkeit in gewünschter Richtung des textilen Flächengebildes verbessert werden. So kann beispielsweise durch die Verwendung von Monofilamenten als Kettfäden die Steifigkeit in Längsrichtung noch zusätzlich erhöht werden, während das Verweben von Multifilamenten als Schußfäden die Biegbarkeit in Querrichtung verbessert. Ein umgekehrtes Verhalten ergibt sich bei einer Kombination verschiedener Garne möglich, bei der die Steifigkeit in Querrichtung durch Monofilamente als Schußfäden verbessert wird, während das Verweben von Multifilamenten als Kettfäden die Biegbarkeit in Längsrichtung erhöht.

Als Fasermaterial verwendbar sind vorzugsweise synthetische Fasern aus Polyamid, Acrylnitril, Polyester, Polyvinylchlorid usw.. Desweiteren sind Mischfasern, z.B. aus Polyester und Baumwolle oder Polyamid und Zellwolle, einsetzbar. Gleiches gilt für hochfeste Fasern, wie z.B. Aramid, Glasfaser, Koh lefaser, wobei diese hochfesten Fasern auch kombinierbar sind als Fasermaterial für die Polketten und/oder Schußfäden oder Kettfäden mit herkömmlichen synthetischen Fasern.

Schließlich können auch mehrere Gewebelagen aus einer unaufgeschnittenen Doppelpolware benachbart und mit Abstand übereinander und in Längsrichtung verlaufend angeordnet sein, wobei sich eine oder mehrere Doppelpollagen mit einem Flachgewebe oder -gewirke abwechseln oder von diesem außen- und/oder innenseitig eingeschlossen sein.

Weitere Ausgestaltungen der Erfindung sind den Unteransprüchen und der nachfolgenden Beschreibung zu entnehmen.

Die Erfindung wird nachstehend anhand der in den beigefügten Abbildungen dargestellten Ausführungsbeispiele näher erläutert.

Fig.1 zeigt schematisch eine Seitenansicht einer Verschließbahn,

Fig.2a und 2b zeigen teilweise einen Längsschnitt eines ersten Ausführungsbeispiels einer Materialbahn der Verschließbahn,

Fig.3 zeigt teilweise einen Längsschnitt eines zweiten Ausführungsbeispiels einer Materialbahn der Verschließbahn,

Fig.4 zeigt teilweise einen Längsschnitt eines dritten Ausführungsbeispiels einer Materialbahn der Verschließbahn,

Fig.5 zeigt teilweise einen Längsschnitt eines vierten Ausführungsbeispiels einer Materialbahn der Verschließbahn.

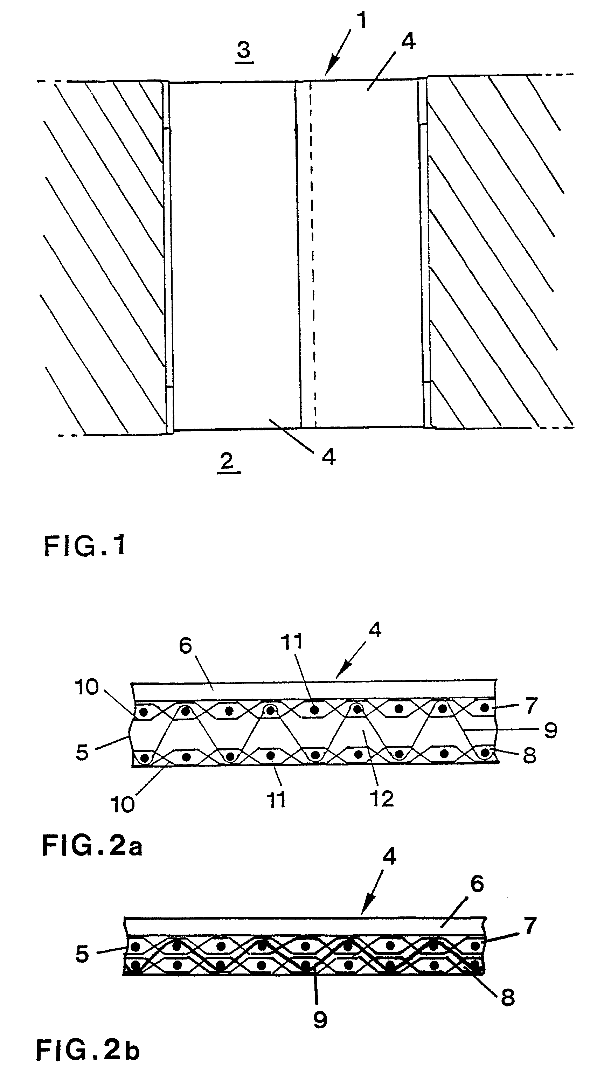

Figur 1 zeigt eine Verschließbahn 1, die als Übergangseinrichtung zwischen zwei Räumen 2 und 3 angeordnet ist und aus zwei Materialbahnen 4 besteht, die nach Art einer Schwing- oder Pendeltür jeweils einseitig angelenkt sind. Die Materialbahnen 4 können wellenförmig in Form eines Faltenbalges ausgebildet sein oder wie hier dargestellt durch Beschichtung mit einem härtenden Kunststoff nach Art einer Scheibe weitgehend eben geformt sein. Länge und Breite der Verschließbahn liegen im Bereich einiger cm oder m.

Figur 2a und 2b zeigen einen Teilbereich eines Längsschnitts eines ersten Ausführungsbeispiels einer der Materialbahnen 4 der Verschließbahn 1, die beide gleich aufgebaut sind. Diese Materialbahn 4 besteht aus einem textilen Flächengebilde 5, das mit einer Kunststoffbahn 6 beschichtet ist.

Die Kunststoffbahn 6 kann als härtende Beschichtung der Materialbahn 4 eine geeignete Dimensionsstabiltät verleihen. Das textile Flächengebilde 5 wird von einer Lage einer dreidimensionalen Textilkonstruktion aus einer unaufgeschnittenen Doppelware, hier Doppelpolgewebe, mit Oberware und Unterware gebildet.

Das unaufgeschnittene Doppelpolgewebe umfaßt ein Obergewebe 7 und ein Untergewebe 8 sowie zwischen dem Ober- und Untergewebe hin- und herwechselnde Polketten 9. Jeweils in Leinwandbindung verkreuzte Kettfäden 10 und Schußfäden 11 bilden das Obergewebe 7 und Untergewebe 8. Die Polketten 9 halten als Querfäden das Obergewebe 7 und Untergewebe 8 mit Abstand zueinander unter Bildung eines Florraumes 12 (vgl. Fig.2a). Vorzugsweise sind die Polketten 9 im wesentlichen senkrecht zur Kett- und Schußrichtung angeordnet, können jedoch auch als schräg verlaufende Querfäden zwischen Obergewebe 7 und Untergewebe 8 angeordnet sein, was insbesondere bei einer Ausbildung der Ober- und Unterware als Grundgewirke gilt, wie nachstehend noch ausgeführt wird. Die Einbindung der Polketten 9 erfolgt durch eine 2V Schuß Polaufbindung. Je nach gewünschter Dichte der Polketten 9 zwischen dem Obergewebe 7 und dem Untergewebe 8 können die Polketten 9 auch durch eine 2/4 V Schuß Polauf- oder 3/6W Poldurchbindung eingebunden sein. In Schußrichtung können benachbarte Polketten 9 jeweils an denselben Schußfäden 11 an- oder abgebunden sein oder an verschiedenen Schußfäden 11, wobei letztere Alternative eine gleichmäßigere Verteilung angreifender Kräfte bewirken kann. Die Länge der Polketten 9 liegt bei ca. 5 mm, kann jedoch vorzugsweise zwischen 0,1 und 12 mm variieren. Dementsprechend können Ober- und Unterware auch unmittelbar aufeinanderliegend über die Polfäden miteinander verbunden sein (vgl. Fig.2b). Die Dichte der Polketten kann variieren zwischen sehr dicht und dicht und liegt vorzugsweise zwischen 300 Polketten/cm$^2$ und 25 Polketten/cm$^2$. Länge und Dichte der Polketten 9 ist so aufeinander abgestimmt, daß durch äußere Belastung eine Formänderung eintreten kann, die allerdings nach Entlastung durch Rückbildung entfällt. Mit zunehmender Dichte der Polketten 9 können diese eine größere Länge aufweisen und damit der Doppelpolware eine gute Elastizität verleihen.

Bei einer Verschließbahn 1 mit Materialbahnen 4 in Form einer Schwingtür erstrecken sich die Kettfäden 10 des textilen Flächengebildes 5 vorzugsweise in vertikaler Richtung, während die Schußfäden 11 in horizontaler Richtung der Verschließbahn 1 verlaufen. Die Dicke einer Materialbahn 4 der Verschließbahn 1 wird bestimmt von der Höhe der dreidimensionalen Textilstruktur, insbesondere der Länge der Polketten 9, und der Dicke der Kunststoffbahn 6. Ist wie aus Figur 2 ersichtlich, die Kunststoffbahn 6 nur an einer Seite der Materialbahn 4 vorgesehen, so handelt es sich hierbei um die Außen- und damit Wetterseite.

Als textile Fasergarne werden Spinnfaser-, Multifilament- und/oder Monofilamentgarne eingesetzt. Die Spinnfaser- und Multililamentgarne werden in den Richtungen eingetragen, in denen eine gewisse Biegbarkeit gewünscht ist. In den Richtungen möglichst hoher Steifigkeit werden vorzugsweise Monofilamente eingesetzt. Die Garnstärke liegt im Bereich zwischen 10 und 600 tex, vorzugsweise 100 - 180 tex. Was die Verkreuzung von Kett- und Schußfäden anbetrifft, so sind neben der Leinwandbindung auch Bindungen mit Fadenflottungen, wie z.B. Panamabindung, Atlasbindung oder Köperbindung, einsetzbar. Insbesondere bei Einwebung einer hohen Schußzahl wird eine Bindung mit Fadenflottungen bevorzugt.

Als Fasermaterial dient Polyester. Andere synthetische Fasern, wie z.B. Polyamid, Polypropylen, Acrylnitril usw., sowie Mischfasern sind ebenfalls verwendbar. Gleiches gilt für die hochfesten Fasern, wie z. B. Aramid, hochfestes Polyäthylen, Glasfasern, Kohlefaser. Darüberhinaus sind verschiedene Faserarten und -materialien in Anpassung an das gewünschte Eigenschaftsprofil der Verschließbahn zum Aufbau des textilen Flächengebildes 5 kombinierbar. So sind vorzugsweise die in der Richtung einer hohen zu erzielender Steifigkeit verlaufenden Fäden als Monofilamente und/oder hochfeste Fasern ausgebildet, während die in der Richtung einer guten zu erzielender Biegbarkeit verlaufenden Fäden als Multifilamente ausgebildet sind. Zur Unterstützung können auch die Polketten 9 aus Monofilamentgarnen oder hochfesten Fasern bestehen. Die Schußfäden 11 bestehen dabei aus herkömmlichen synthetischen Fasern oder gemischten Fasern. Desweitern ist es möglich, nur für die Polketten 9 Monofilamente oder hochfeste Fasern zu verwenden.

Weiterhin kann die Doppelpolware auch als Doppelpolgewirke ausgebildet sein, wobei ein Obergewirke und ein Untergewirke mit maschenförmigen Verschlingungen vorgesehen sind, zwischen denen die Polketten hin- und herwechselnd eingelegt sind. Die vorstehenden Ausführungen gelten entsprechend für das vorzugsweise als unaufgeschnittener Wirkplüsch ausgebildete Doppelpolgewirke.

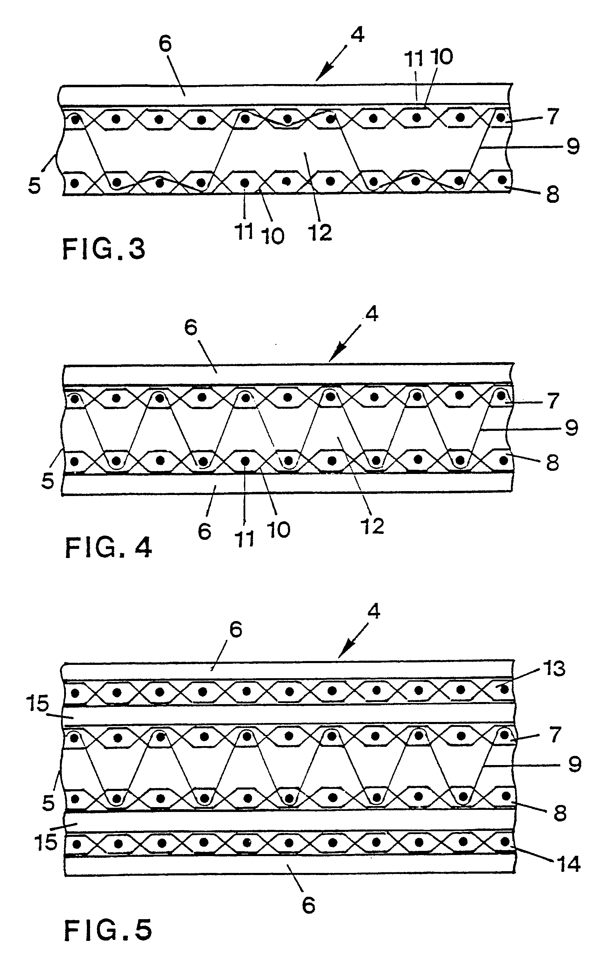

Figur 3 zeigt einen Teilschnitt in Längsrichtung eines zweites Ausführungsbeispiels einer Materialbahn 4 mit einem textilen Flächengebilde 5 in Form eines unaufgeschnittenen Doppelpolgewebes, das bis auf die Einbindung der Polketten 9 dem vorstehend beschriebenen ersten Ausführungsbeispiel entspricht. Die Polketten 9 sind hier mittels einer 3/6 Schuß Poldurchbindung eingebunden.

Aber auch hier können die Polketten 9 je nach gewünschter Dichte ebenso durch eine V-Bindung oder 3/8W, 4/8W Schuß Poldurchbindung die Oberware 7 und Unterware 8 verbinden.

Figur 4 zeigt einen Teilbereich eines Längsschnitts eines dritten Ausführungsbeispiels einer Materialbahn 4 der Verschließbahn 1. Das textile Flächengebilde 5 ist hier beidseitig mit einer Kunstsoffbahn 6 beschichtet. Ober-und unterseitige Schicht der Kunststoffbahn 6 sind gleich dick, können aber auch verschieden stark ausgebildet sein. Als Kunststoffmaterial verwendbar ist Gummi oder ein sonstiger elastomerer Kunststoff bei Ausbildung als Faltenbalg. Für eine Ausbildung als Tür oder Tor wird als Kunststoffmaterial vorzugsweise PVC oder sonstiger Kunststoff, der der Materialbahn 4 ausreichende Härte und Stabilität gibt.

Figur 5 zeigt einen Teilschnitt in Längsrichtung eines vierten Ausführungsbeispiels einer Materialbahn 4 der Verschließbahn 1. Das textile Flächengebilde 5 in Form einer unaufgeschnittenen Doppelpolware, hier Doppelpolgewebe (gleiches gilt für das Doppelpolgewirke), ist zwischen zwei Flachgewebebahnen 13 und 14 angeordnet, die das textile Flächengebilde 5 sandwichartig einschließen. Das textile Flächengebilde 5 kann wie vorstehend beschrieben ausgebildet sein. Bei den Flachgeweben 13, 14 handelt es sich um herkömmliche Flachgewebe, die allerdings durch Kettengewirke austauschbar sind. Zwischen dem textilen Flächengebilde 5 und den Flachgeweben 13, 14 oder -gewirken ist jeweils eine zusätzliche Kunststoffbahn 15 angeordnet.

Die beschriebenen Ausführungsbeispiele können gemäß weiterer nicht dargestellter Ausgestaltungen mehrere übereinander angeordnete textile Flächenge bilde 5 aufweisen, deren jeweilige Dicke und/oder Dichte durch Veränderung der Länge und/oder der Zahl der Polketten verschieden sein kann.

## Ansprüche

1. Verschließbahn für Übergänge, bestehend aus einem mindestens einseitig gehaltenen, wellenförmigen oder eben angeordneten, textilen Flächengebilde mit einer Polymer- oder Kunststoffbeschichtung, dadurch gekennzeichnet, daß als textiles Flächengebilde (5) eine unaufgeschnittene Doppelpolware mit Oberware (7) und Unterware (8) sowie dazwischen angeordneten, einen Florraum (12) bildenden Polketten (9) vorgesehen ist, wobei die Länge und Dichte der Polketten (9) derart gewählt ist, daß diese elastische Verbindungsstege zwischen Oberware (7) und Unterware (8) bilden.

2. Verschließbahn nach Anspruch 1, dadurch gekennzeichnet, daß die unaufgeschnittene Doppelpolware von einem Doppelpolgewebe gebildet wird, dessen verkreuzte Kettfäden (10) und Schußfäden (11) aus jeweils einem Chemiegarn unterschiedlicher Festigkeit und/oder Steifigkeit bestehen.

3. Verschließbahn nach Anspruch 2, dadurch gekennzeichnet, daß die Kettfäden (10) aus einem Monofilamentgarn oder hochfesten Multifilamentgarn und die Schußfäden (11) aus einem Spinnfaser- oder Multifilamentgarn bestehen.

4. Verschließbahn nach Anspruch 2, dadurch gekennzeichnet, daß die Schußfäden (11) aus einem Monofilamentgarn oder hochfesten Multifilamentgarn und die Kettfäden (10) aus einem Spinnfaser- oder Multifilamentgarn bestehen.

5. Verschließbahn nach einem der Ansprüche 1 bis 4, dadurch gekennzeichnet, daß die Polketten (9) aus dem gleichen Garn wie die Kettfäden (10) und/oder die Schußfäden (11) bestehen.

6. Verschließbahn nach einem der Ansprüche 1 bis 7, dadurch gekennzeichnet, daß die Doppelpolware aus Chemiefasern besteht, wie Polyester, Polyamid, Polypropylen, Polyethylen, Polyacrylnitril oder Vinylat.

7. Verschließbahn nach einem der Ansprüche 1 bis 6, dadurch gekennzeichnet, daß die Doppelpolware ganz oder teilweise aus hochfesten Fasern besteht, wie Aramid, Glass, Kohlenstoff oder hochfestem Polyethylen.

8. Verschließbahn nach Anspruch 1 oder 6 oder 7, dadurch gekennzeichnet, daß Ober- und Unterware von einem Gewirke gebildet werden.

9. Verschließbahn nach Anspruch 8, dadurch gekennzeichnet, daß Oberware (7) und Unterware (8) aus einem anderen Chemiegarn als die Polketten (9) hergestellt sind.

10. Verschließbahn nach einem der Ansprüche 1 bis 9, dadurch gekennzeichnet, daß die Länge der Polketten (9) zwischen 0,1 und 12 mm liegt, vorzugsweise zwischen 0,1 und 4 mm, und die Dichte der Polketten (9) zwischen 300 Polketten/cm$^2$ und 25 Polketten/cm$^2$ liegt.

11. Verschließbahn nach einem der Ansprüche 1 bis 10, dadurch gekennzeichnet, daß mehrere mit Abstand zueinander angeordnete textile Flächengebilde (5) übereinander angeordnet sind.

12. Verschließbahn nach einem der Ansprüche 1 bis 11, dadurch gekennzeichnet, daß die Materialbahnen (4) jeweils mindestens eine zusätzliche Flachgewebelage (13, 14) benachbart zu dem textilen Flächengebilde (5) aufweisen.

13. Verschließbahn nach einem der Ansprüche 1 bis 12, dadurch gekennzeichnet, daß das textile Flächengebilde (5) zweiseitig mit einer Polymerbahn (6) oder für eine dauerhafte Formgebung mit einem Thermoplast beschichtet ist.

14. Verschließbahn nach einem der Ansprüche 1 bis 13, dadurch gekennzeichnet, daß das textile Flächegebilde (5) aus mehreren nach Art einer Ziehharmonika aneinandergesetzten Materialbahnen (4) besteht.

FIG.1

FIG.2a

FIG.2b

FIG.3

FIG. 4

FIG.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | DE-A-2839775 (GIERLINGS) <br> * das ganze Dokument * | 1, 13 | D03D27/10 <br> B61D17/22 <br> B23Q11/08 |
| A |  | 3-7, 9, 10 |  |
| A | FR-A-2154642 (METZELER) <br> * Ansprüche 1-14; Figuren 1-7 * | 1-7, 9-14 |  |
| A | EP-A-0285162 (HUBNER) <br> * Anspruch 1 * | 1, 13, 14 |  |
| A | EP-A-0061320 (JOHNSTON) <br> * Anspruch 10; Figuren 1, 4 * | 8, 14 |  |
| A | DE-U-1787807 (BERGHOFER) <br> * Ansprüche 1-4; Figur 1 * | 13, 14 |  |

RECHERCHIERTE
SACHGEBIETE (Int. Cl.5 )

D03D
B61D
B23Q
F16J

Der vorliegende Recherchenbericht wurde für alle Patentansprüche erstellt

| Recherchenort | Abschlußdatum der Recherche | Prüfer |
|---|---|---|
| DEN HAAG | 11 JULI 1990 | BOUTELEGIER C.H.H. |